# EUROPEAN PATENT APPLICATION

(11) **EP 0 937 925 A1**
(43) Date of publication of application: **25.08.1999**
(21) Application number: 98102874.9
(22) Date of filing: 19.02.1998
(51) Int. Cl.: F16K 5/06, F16K 41/02

(54) **Sealing gasket module for a valve**

(71) Applicant: Wang, James, Peitun District, Taichung (TW)
(72) Inventor: Wang, James, Peitun District, Taichung (TW)
(74) Representative: Patentanwälte Hauck, Graalfs, Wehnert, Döring, Siemons

(57) **Abstract**

A valve includes a supporting base having an inner wall defining a recess, a lug extending from the supporting base and having an inner wall defining a passage, an abutting edge formed between the inner wall of the supporting base and the inner wall of the lug, and a control shaft extending through the passage and formed with an annular flange received in the recess. A sealing gasket module (30) is received in the recess and includes a first compression ring (31) mounted around the control shaft and urged on the abutting edge, a second compression ring (32) mounted around the control shaft and urged on the first compression ring, and an abutting ring (33) mounted around the control shaft and abutting between the second compression ring and the annular flange.

## Description

The present invention relates to a sealing gasket module for a control shaft of a valve.

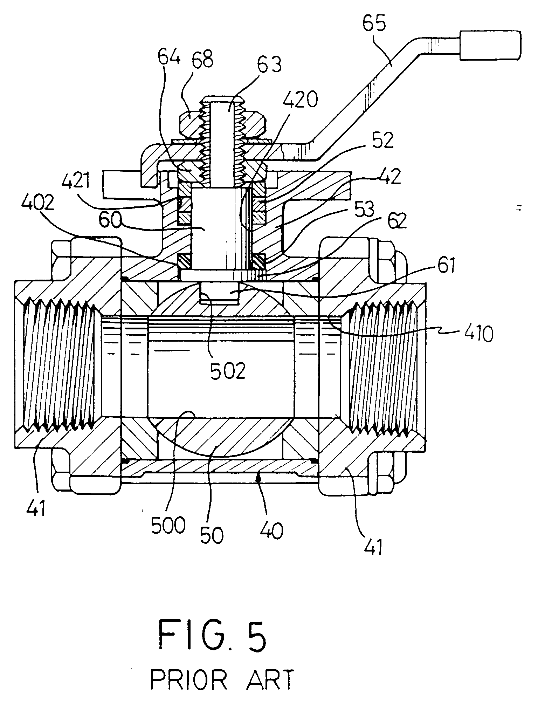

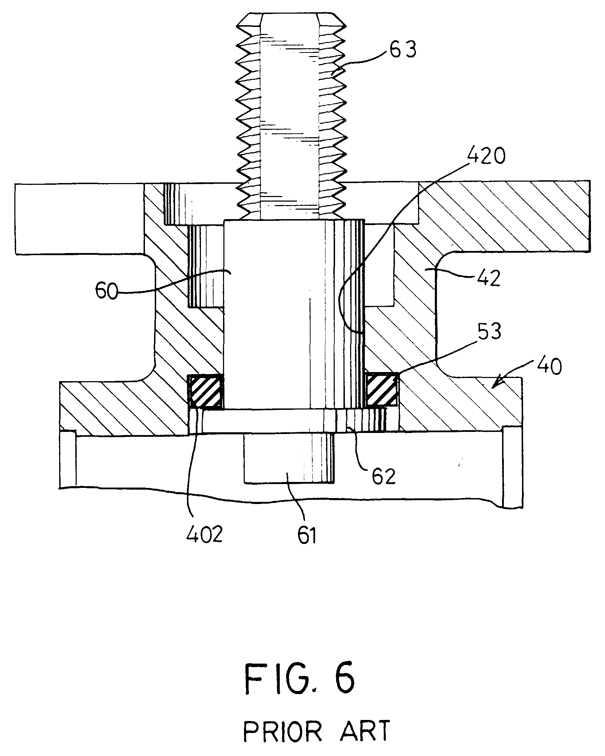

A conventional sealing gasket for a valve is shown in Figs. 5 and 6, illustrating a conventional sealing gasket 53 for a control shaft 60 of a valve in accordance with the prior art.

The valve comprises a hollow supporting base 40 including two end portions each connected with an end cap 41 defining a hole 410, and a ball 50 rotatably mounted in the supporting base 40 and including an inner wall defining a hole 500, and an outer periphery defining a socket 502.

The supporting base 40 includes an inner wall defining a recess 402 for receiving the sealing gasket 53, a lug 42 extending from an outer wall of the supporting base 40 and defining a passage 420.

The control shaft 60 is mounted in the passage 420 and is formed with an annular flange 62 received in the recess 402, and a plug 61 extends from the annular flange 62 and is fitted in the socket 502 for rotating the ball 50.

A plurality of bushings 52 are received in a space 421 defined in the lug 42. A threaded rod 63 extends from the control shaft 60. A compression nut 64 is engaged on the threaded rod 63 and is urged on the bushings 52. A handle 65 is fixedly mounted on the threaded rod 63 by a positioning nut 68 for rotating the threaded rod 63.

In operation, the threaded rod 63 can be rotated by the handle 65 to rotate the control shaft 60 together with the plug 61 which rotates the ball 50 such that the hole 500 of the ball 50 can communicate with the hole 410 of each of the two end caps 41, thereby disposing the ball valve in an open status.

The ball valve can be disposed in a closed status when the hole 500 of the ball 50 does not communicate with the hole 410 of each of the two end caps 41 by means of rotating the ball 50.

The conventional sealing gasket module 53 is received in the recess 402 for providing a sealing effect between the control shaft 60, the lug 42 and the supporting base 40. However, the sealing gasket 53 cannot provide an efficient sealing effect during long-term utilization.

In accordance with one aspect of the present invention, there is provided a sealing gasket module for a valve which comprises a supporting base including an inner wall defining a recess, a lug extending outwardly from an outer wall of the supporting base and including an inner wall defining a passage, an abutting edge formed between the inner wall of the supporting base and the inner wall of the lug, and a control shaft extending through the passage and formed with an annular flange received in the recess.

The sealing gasket module is received in the recess and comprises a first compression ring mounted around the control shaft and urged on the abutting edge, a second compression ring mounted around the control shaft and urged on the first compression ring, and an abutting ring mounted around the control shaft and abutting between the second compression ring and the annular flange.

In the drawings:
Fig. 1 is a front plan partially cross-sectional view of a sealing gasket module for a valve according to a first embodiment of the present invention;
Fig. 2 is a partially enlarged view of Fig. 1;
Fig. 3 is an operational view of Fig. 2;
Fig. 4 is a front plan partially cross-sectional view of a sealing gasket module for a valve according to a second embodiment of the present invention;
Fig. 5 is a front plan partially cross-sectional view of a conventional sealing gasket for a valve according to the prior art; and
Fig. 6 is a partially enlarged view of Fig. 5.

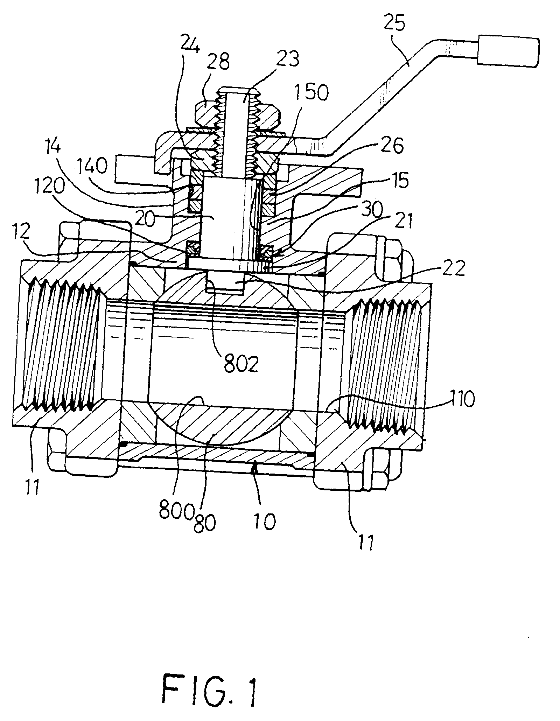

Referring now to Figs. 1-3, a sealing gasket module 30 according to a first embodiment of the present invention can be adapted for a ball valve comprising a hollow supporting base 10 including two end portions each fixedly connected with an end cap 11 which axially defines a hole 110, and a ball 80 rotatably mounted in the supporting base 10 and including an inner wall axially defining a hole 800, and an outer periphery defining a tetragonal socket 802.

The supporting base 10 further includes an inner wall 12 defining a recess 120 for receiving the sealing gasket module 30, a lug 14 extending outwardly from an outer wall of the supporting base 10 and including an inner wall 15 defining a passage 150 communicating with the recess 120, and an abutting edge 16 formed between the inner wall 12 of the supporting base 10 and the inner wall 15 of the lug 14 and located between the recess 120 and the passage 150.

A control shaft 20 is rotatably mounted in the passage 150 and includes one end portion formed with an annular flange 21 received in the recess 120, and a tetragonal plug 22 extending from the annular flange 21 and fitted in the socket 802 for rotating the ball 80.

A plurality of bushings 26 are received in a space 140 defined in the lug 14. A threaded rod 23 extends from the control shaft 20. A compression nut 24 is engaged on the threaded rod 23 and is urged on the bushings 26. A handle 25 is fixedly mounted on the threaded rod 23 by a positioning nut 28 for rotating the threaded rod 23.

In operation, the threaded rod 23 can be rotated by the handle 25 to rotate the control shaft 20 together with the plug 22 which in turn rotates the ball 80 such that the hole 800 of the ball 80 can communicate with the hole 110 of each of the two end caps 11, thereby disposing the ball valve in an open status.

The ball valve can be disposed in a closed status when the hole 800 of the ball 80 does not communicate with the hole 110 of each of the two end caps 11 by means of rotating the ball 80.

The sealing gasket module 30 is received in the recess 120 and comprises a first compression ring 31 mounted around the control shaft 20 and urged on the abutting edge 16, a second compression ring 32 mounted around the control shaft 20 and urged on the first compression ring 31, and an abutting ring 33 mounted around the control shaft 20 and abutting between the second compression ring 32 and the annular flange 21.

Preferably, the first compression ring 31 and the abutting ring 33 are each made of a resilient material, and the second compression ring 32 is made of a rigid metallic material.

The first compression ring 31 includes a first tapered surface 310 facing the annular flange 21 and the second compression ring 32 includes a second tapered surface 320 facing away from the annular flange 21 and engaging with the first tapered surface 310.

The first tapered surface 310 includes a first end portion formed with a first flat section 312, and a second end portion formed with a second flat section 314, and the second tapered surface 320 includes a first end portion formed with a third flat section 322 abutting on the first flat section 312, and a second end portion formed with a fourth flat section 324 abutting on the second flat section 314.

In assembly, the compression nut 24 can be rotated relative to the threaded rod 23 to move it outward such that the annular flange 21 can be moved toward the inner wall 15 of the lug 14, thereby compressing the sealing gasket module 30.

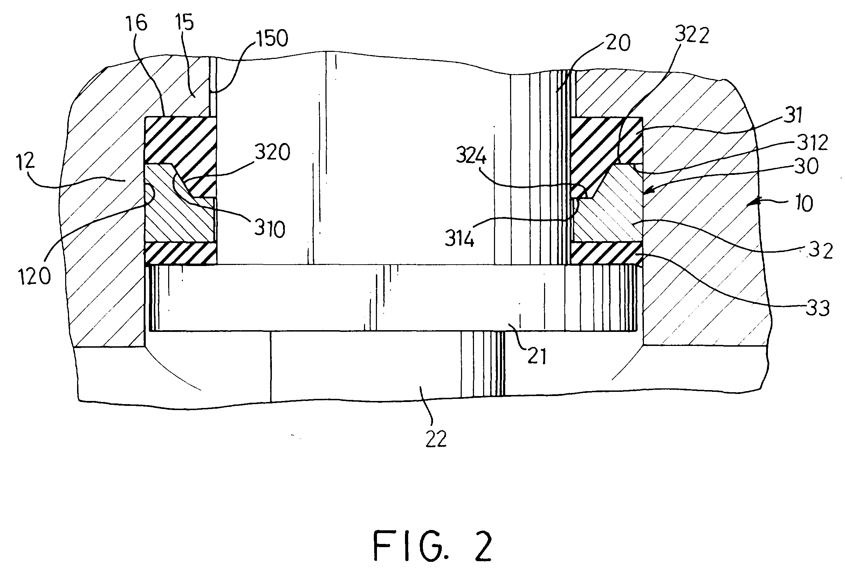

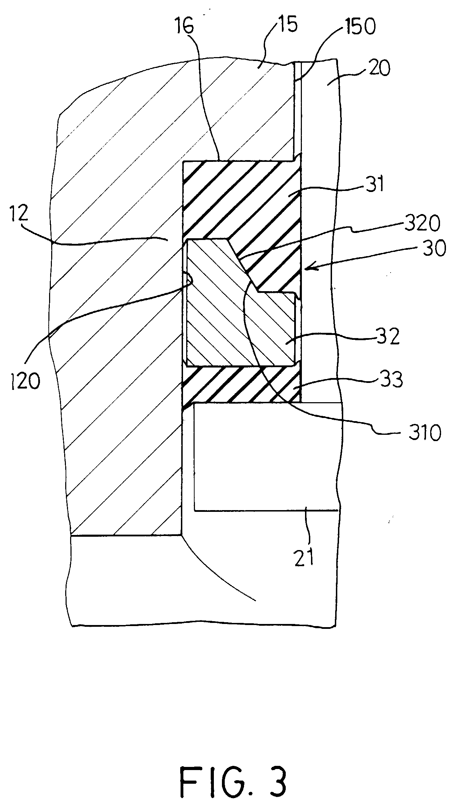

During the compressed process of the sealing gasket module 30, the first compression ring 31 and the abutting ring 33 can be expanded by means of a tapered action between the first and second tapered surfaces 310 and 320 from a first position as shown in Fig. 2 to a second position as shown in Fig. 3, thereby efficiently providing a tight sealing effect between the control shaft 20 and the inner wall 12 of supporting base 10.

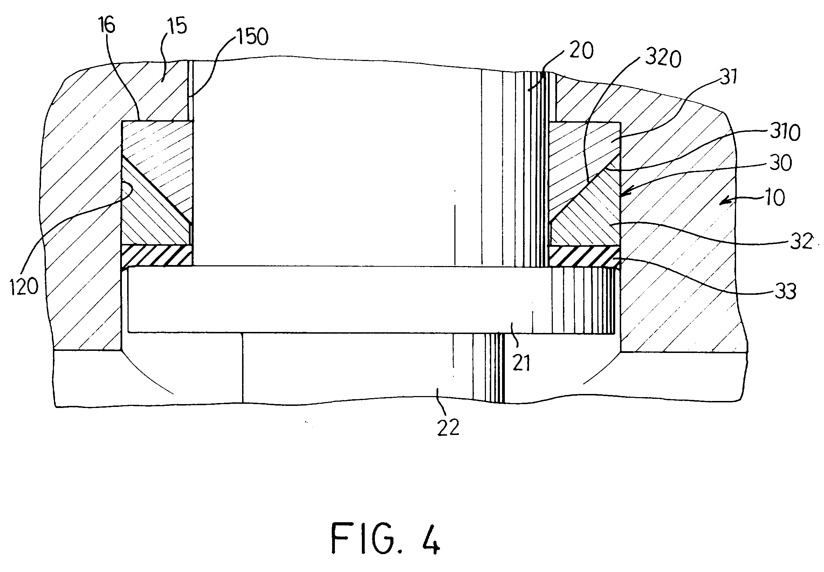

Referring to Fig. 4, according to a second embodiment of the present invention, the first flat section 312, the second flat section 314, the third flat section 322 and the fourth flat section 324 are undefined.

## Claims

1. A sealing gasket module (30) for a valve which comprises a supporting base (10) including an inner wall (12) defining a recess, (120) for receiving said sealing gasket module (30), a lug (14) extending outwardly from an outer wall of said supporting base (10) and including an inner wall (15) defining a passage (150), an abutting edge (16) formed between said inner wall (12) of said supporting base (10) and said inner wall (15) of said lug (14), and a control shaft (20) extending through said passage (150) and formed with an annular flange (21) received in said recess (120), **characterized in that** said sealing gasket module (30) comprises:
a first compression ring (31) mounted around said control shaft (20) and urged on said abutting edge (16);
a second compression ring (32) mounted around said control shaft (20) and urged on said first compression ring (31); and
an abutting ring (33) mounted around said control shaft (20) and abutting between said second compression ring (32) and said annular flange (21).

2. The sealing gasket module according to claim 1, **characterized in that** said first compression ring (31) is made of a resilient material.

3. The sealing gasket module according to claim 1, **characterized in that** said second compression ring (32) is made of a rigid metallic material.

4. The sealing gasket module according to claim 1, **characterized in that** said abutting ring (33) is made of a resilient material.

5. The sealing gasket module according to claim 1, **characterized in that** said first compression ring (31) includes a first tapered surface (310) facing said annular flange (21), and said second compression ring (32) includes a second tapered surface (320) facing away from said annular flange (21) and engaging with said first tapered surface (310).

6. The sealing gasket module according to claim 5, **characterized in that** said first tapered surface (310) includes a first end portion formed with a first flat section (312), and a second end portion formed with a second flat section (314), and said second tapered surface (320) includes a first end portion formed with a third flat section (322) abutting on said first flat section (312), and a second end portion formed with a fourth flat section (324) abutting on said second flat section (314).
